# EUROPEAN PATENT APPLICATION

(11) **EP 3 015 748 A1**
(43) Date of publication of application: **04.05.2016**
(21) Application number: 14816754.7
(22) Date of filing: 26.05.2014
(51) Int. Cl.: F16J 15/34

(54) **SEALING DEVICE**

(30) Priority: 26.06.2013 JP 2013134139
(71) Applicant: EagleBurgmann Japan Co., Ltd., Tokyo 105-8587 (JP)
(72) Inventor: TAKAHASHI Hidekazu, Tokyo 105-8587 (JP)
(74) Representative: TBK
(86) International application number: PCT/JP2014/063784
(87) International publication number: WO 2014/208235

(57) **Abstract**

Provided is a sealing device which includes a pumping ring capable of increasing the flow amount of the fluid to be self-circulated, and thereby increasing the head. The pumping ring (160) includes: a through hole (161) that is provided so as to pass through the pumping ring (160) from an inner peripheral surface to an outer peripheral surface and serves as a passage of the fluid; and an inlet groove (162) that is provided on the inner peripheral surface so as to run from a side face on a side where the mechanical seal (M) is disposed to the through hole (161), and leads the fluid into the through hole (161), and on an outer peripheral surface of the sleeve (110), an auxiliary inlet groove (111) that leads the fluid into the through hole (161) is provided at a position opposing the inlet groove (162) and the through hole (161).

## Description

### TECHNICAL FIELD

The present invention relates to a sealing device which includes a mechanical seal and a pumping ring.

### BACKGROUND ART

In a device in which a mechanical seal is used, there is known a technique for circulating a flushing fluid for the purpose of increasing lubricity of sliding portions of a stationary ring and a rotary ring which constitute the mechanical seal. In addition, there is also known a technique that uses a pumping ring to self-circulate the flushing fluid by rotating together with a rotary shaft.

In the pumping ring, a through hole which passes through the pumping ring from an inner peripheral surface to an outer peripheral surface, and a groove on the inner peripheral surface which leads to the through hole from one side face provided. Accordingly, as centrifugal force is created by the rotation of the pumping ring together with the rotary shaft, it becomes possible to exert a function to let the flushing fluid flow from the inner peripheral surface side of the through hole to the outer peripheral surface side thereof via the groove. Consequently, it becomes possible to self-circulate the flushing fluid by using the pumping ring as a power source (see

### Patent Literature 1).

Here, in order to increase the flow amount of the flushing fluid that is self-circulated by the pumping ring, it is necessary to increase the cross-sectional area of the groove and the cross-sectional area of the through hole. Note that, when the flow amount is small, a head is reduced.

Since the pumping ring is an annular member, degree of freedom in designing the through hole is high, and hence, normally, it is easy to increase the cross-sectional area thereof. However, the thickness of the pumping ring in a radial direction is determined by an annular gap between the rotary shaft and a shaft hole of a housing. From the perspective of protecting the rotary shaft or the like, a sleeve is often mounted on the rotary shaft. In such cases, the thickness of the pumping ring in the radial direction is determined by an annular gap between the outer peripheral surface of the sleeve and the inner peripheral surface of the shaft hole of the housing. Accordingly, when the annular gap is narrow, the thickness of the pumping ring in the radial direction is reduced, and hence the cross-sectional area of the groove mentioned above needs to be reduced. In such a case, it is difficult to increase the flow amount of the flushing fluid which is lead into the through hole. Thus, it is not possible to increase the head.

### CITATION LIST

### PATENT LITERATURE

Patent Literature 1: Japanese Patent Application Laid-open No. 2002-139157

### SUMMARY OF INVENTION

### TECHNICAL PROBLEM

An object of the present invention is to provide a sealing device which includes a pumping ring capable of increasing the flow amount of the fluid to be self-circulated, and thereby increasing the head.

### SOLUTION TO PROBLEM

In order to solve the above problem, the present invention has adopted the following means.

That is, the sealing device according to the present invention is a sealing device comprising: a mechanical seal having a rotary ring that is provided on a rotary shaft side and a stationary ring that is provided on a housing side and slides relative to the rotary ring, the housing having a shaft hole into which a rotary shaft is inserted; a sleeve that is provided on an outer peripheral side of the rotary shaft and on which the rotary ring is mounted; and a pumping ring that is mounted on an outer periphery of the sleeve, rotates together with rotation of the rotary shaft and the sleeve, and self-circulates a fluid, wherein the pumping ring includes: a through hole that is provided so as to pass through the pumping ring from an inner peripheral surface to an outer peripheral surface and serves as a passage of the fluid; and an inlet groove that is provided on the inner peripheral surface so as to run from a side face on a side where the mechanical seal is disposed to the through hole, and leads the fluid into the through hole, and on an outer peripheral surface of the sleeve, an auxiliary inlet groove that leads the fluid into the through hole is provided at a position opposing the inlet groove and the through hole.

According to the present invention, a passage for leading the fluid into the through hole is formed by the inlet groove provided on the pumping ring and the auxiliary inlet groove provided on the outer peripheral surface of the sleeve. Accordingly, even in the case where the cross-sectional area of the inlet groove needs to be reduced, it is possible to increase the cross-sectional area of the entire passage for leading the fluid into the through hole due to the provision of the auxiliary inlet groove.

### ADVANTAGEOUS EFFECTS OF INVENTION

As described above, according to the present invention, it becomes possible to increase the flow amount of the fluid to be self-circulated, and thereby increase the head.

### BRIEF DESCRIPTION OF DRAWINGS

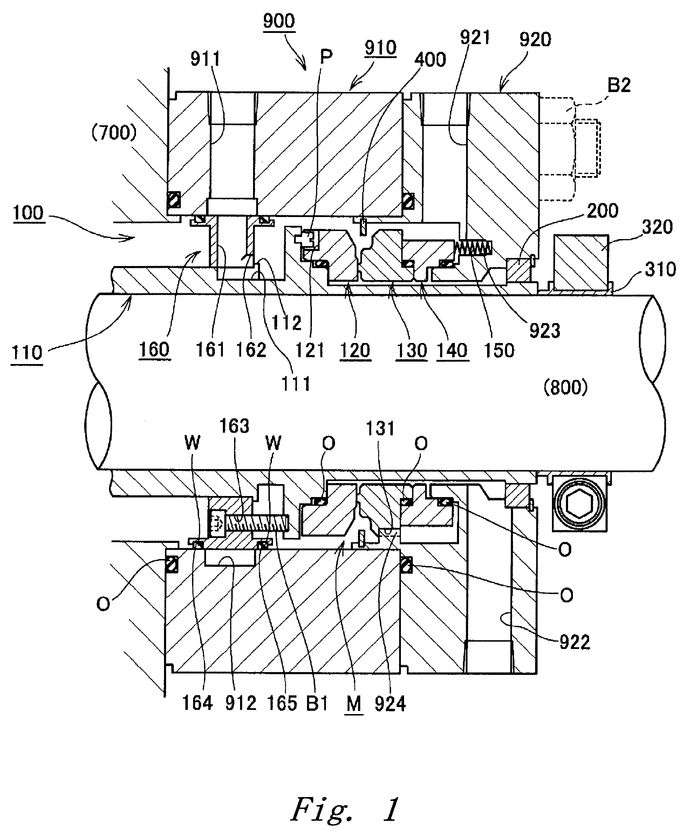

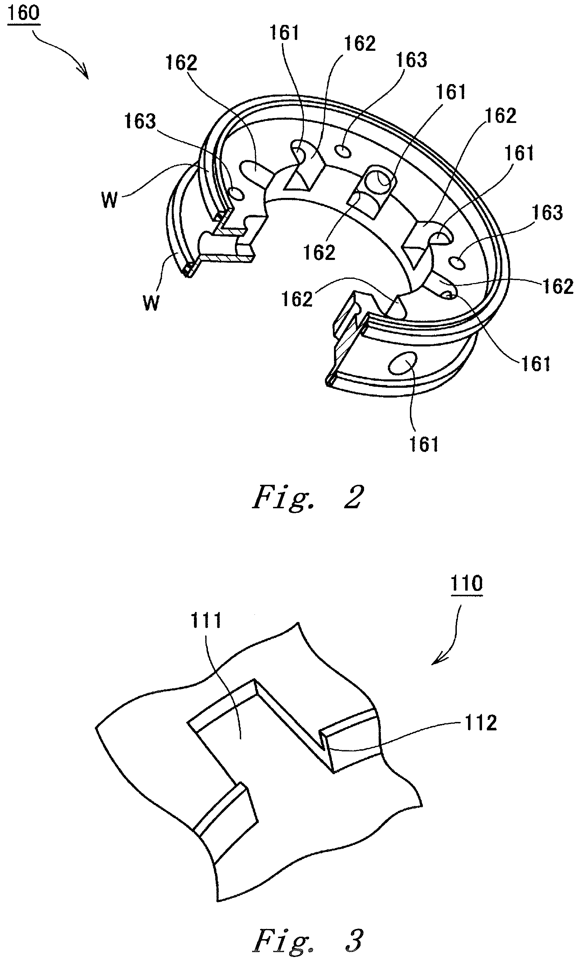

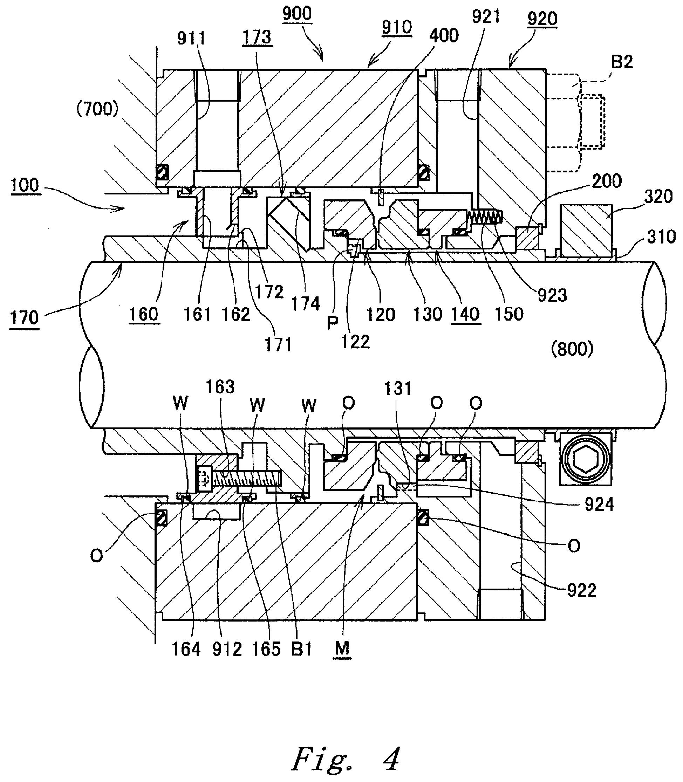

Fig. 1 is a schematic cross-sectional view showing a mounted state of a sealing device according to a first example of the present invention. Fig. 2 is a partially broken perspective view of a pumping ring according to the first example of the present invention. Fig. 3 is a perspective view showing a portion of a sleeve according to the first example of the present invention. Fig. 4 is a schematic cross-sectional view showing the mounted state of the sealing device according to a second example of the present invention.

### DESCRIPTION OF EMBODIMENTS

Hereinafter, modes for carrying out the present invention will be exemplarily described in detail based on examples thereof with reference to the drawings. However, the dimensions, materials, shapes, relative arrangements and so on of constituent parts described in the examples are not intended to limit the scope of the present invention to these alone in particular unless specifically described.

### (First Example)

With reference to Figs. 1 to 3, a sealing device according to a first example of the present invention will be described.

### <Overall Configuration of Sealing Device>

With reference to Fig. 1 in particular, the overall configuration of the sealing device according to the first example of the present invention will be described. Fig. 1 is a schematic cross-sectional view showing a mounted state of the sealing device according to the first example of the present invention. Note that the cross-sectional view in Fig. 1 is a cross-sectional view including the central axis line of the sealing device. However, in Fig. 1, in order to show characteristic portions for the convenience of the description, the phases of cutting positions (positions in a circumferential direction) are appropriately different. In addition, in the cross-sectional view in Fig. 1, only cut planes are shown (depth lines are omitted).

A sealing device 100 according to the present example is provided for sealing an annular gap between a rotary shaft 800 and a housing 700 having a shaft hole of the rotary shaft 800. Note that the housing 700 is a case of any device on which the sealing device 100 is mounted.

Further, the sealing device 100 includes a mechanical seal M, a substantially cylindrical sleeve 110 provided on the outer peripheral side of the rotary shaft 800, and a pumping ring 160 that rotates together with the rotary shaft 800 and the sleeve 110 and self-circulates a fluid (a flushing fluid in this case). The sleeve 110 is fixed to the rotary shaft 800 in a state in which the sleeve 110 is positioned by a stopper 310. Note that the stopper 310 is fixed to the rotary shaft 800 with a fixture 320.

A housing case 900 for containing the mechanical seal M is fixed to the housing 700 with a bolt B2. The housing case 900 is constituted by an annular first case 910 and an annular second case 920. An discharge passage 911 for discharging the fluid to the outside of the case is provided in the first case 910. In addition, an annular groove 912 is formed on the inner peripheral surface of the first case 910. The above discharge passage 911 is provided so as to pass through from the groove bottom of the annular groove 912 to the outer peripheral surface of the first case 910. In the second case 920, a supply passage 921 for supplying the fluid into the case and a drain passage 922 for discharging the leaked fluid to the outside of the case are provided. In addition, a guide 400 for adjusting the flow of the fluid supplied from the supply passage 921 is provided on the second case 920.

Note that an annular gap between the housing case 900 and the sleeve 110 is sealed by a seal member 200. In each of the first case 910 and the second case 920, an insertion hole (not shown) into which the above bolt B2 is inserted is provided. The insertion hole into which the bolt B2 is inserted is disposed at a position different from the positions of the discharge passage 911, the supply passage 921, and the drain passage 922 in a circumferential direction so as not to pass through them.

The mechanical seal M includes a rotary ring 120 that is provided on the rotary shaft side and a stationary ring 130 that is provided on the housing side and slides relative to the rotary ring 120. Here, the stationary ring 130 is mounted on the housing 700 via the housing case 900 or the like. In addition, the mechanical seal M includes a compression ring 140 and a spring 150 which urge the stationary ring 130 toward the rotary ring 120 side. Note that the spring 150 is mounted on each of a plurality of mounting holes 923 provided on the second case 920. The rotary ring 120 is constituted such that a pin P fixed to the sleeve 110 is fitted in a notch 121 provided on the rotary ring 120 so that the rotary ring 120 is thereby prevented from rotating relative to the sleeve 110. In addition, the stationary ring 130 is constituted such that a protrusion 924 provided on the second case 920 is fitted in a notch 131 provided on the stationary ring 130 so that the stationary ring 131 is thereby prevented from rotating relative to the housing 700.

With the configuration described above, the rotary ring 120 rotates with the rotation of the rotary shaft 800, and the end faces of the non-moving stationary ring 130 and the rotating rotary ring 120 slide relative to each other. In addition, since the stationary ring 130 is urged toward the rotary ring 120 side by the compression ring 140 and the spring 150, the sliding state of the stationary ring 130 and the rotary ring 120 is maintained.

Note that, in a structure that includes the above described sealing device 100, a plurality of O rings O are provided in order to seal gaps between individual members. The O ring O is a well-known technique, and hence the description thereof is omitted.

### <Self Circulation of Fluid by Pumping Ring>

In the present example, for the purpose of cooling, thermal insulation, and improved lubricity of the sliding portions of the rotary ring 120 and the stationary ring 130, a configuration is adopted in which the flushing fluid flows the interior of the sealing device 100. Note that the supply passage 921 and the discharge passage 911 described above are connected to each other by piping (not shown) provided outside the housing case 900. Further, a configuration is adopted in which the flushing fluid circulates through a flow passage formed by the piping, the supply passage 921, the interior of the sealing device 100 and the discharge passage 911.

With reference to Fig. 2 in particular, the pumping ring 160 that serves as a driving source for the flushing fluid to self-circulate will be described in detail. The pumping ring 160 includes a plurality of through holes 161 that are provided so as to pass through the pumping ring 160 from the inner peripheral surface to the outer peripheral surface and serve as passages of the flushing fluid. In addition, the pumping ring 160 includes a plurality of inlet grooves 162 that are provided on the inner peripheral surface thereof so as to run from a side face on the side where the mechanical seal M is disposed to the individual through holes 161, and lead the flushing fluid into the through holes 161.

Note that a plurality of through holes 163 which extend in an axial direction are also provided in the pumping ring 160. The pumping ring 160 is fixed to the sleeve 110 with a plurality of bolts B1 via the through holes 163. In addition, a stopper portion 112 which protrudes outward in a radial direction is provided on the sleeve 110. The pumping ring 160 is positioned in the axial direction by being fixed with the plurality of the bolts B1 in a state in which the pumping ring 160 abuts on the stopper portion 112.

The pumping ring 160 configured as above is disposed so as to block the annular gap between the outer peripheral surface of the sleeve 110 and the inner peripheral surface of the first case 910. At this point, the pumping ring 160 is disposed such that opening portions of the plurality of the through holes 161 on the outer peripheral surface side are positioned to face the annular grooves 912 formed on the inner peripheral surface of the first case 910. In addition, on the outer peripheral surface side of the pumping ring 160, wear rings W made of an engineering plastic such as PTFE or the like are mounted on both sides of the annular groove 912. Accordingly, the leakage of the flushing fluid from between the outer peripheral surface of the pumping ring 160 and the inner peripheral surface of the first case 910 is prevented. Note that the wear rings W are mounted on mounting grooves 164 and 165 provided on both sides of the pumping ring 160 in the axial direction.

Further, a plurality of auxiliary inlet grooves 111 that lead the flushing fluid into the through holes 161 are provided on the outer peripheral surface of the sleeve 110. Note that the plurality of the auxiliary inlet grooves 111 are provided one-by-one at positions opposing the individual inlet grooves 162 and the individual through holes 161 provided on the pumping ring 160. Note that Fig. 3 is a view in which a portion of the sleeve 110, where the auxiliary inlet groove 111 is provided, is viewed obliquely from above. As described, by providing the auxiliary inlet grooves 111 on the sleeve 110, passages for leading the flushing fluid into the through holes 161 are formed by the inlet grooves 162 provided on the pumping ring 160 and the auxiliary inlet grooves 111 provided on the sleeve 110.

With the configuration described above, when the rotary shaft 800 rotates, the pumping ring 160 also rotates together with the sleeve 110. Accordingly, as centrifugal force is created, the flushing fluid is lead into the through hole 161 from the passage formed by the inlet groove 162 and the auxiliary inlet groove 111, and a function to let the flushing fluid flow from the inner peripheral surface side of the through hole 161 to the outer peripheral surface side thereof is exerted. Consequently, it becomes possible to self-circulate the flushing fluid by using the pumping ring 160 as a power source.

### <Advantages of Sealing Device according to Present Example>

As described above, according to the sealing device 100 of the present example, the passage for leading the flushing fluid into the through hole 161 is formed by the inlet groove 162 provided on the pumping ring 160 and the auxiliary inlet groove 111 provided on the outer peripheral surface of the sleeve 110. Accordingly, even in the case where the cross-sectional area of the inlet groove 162 needs to be reduced, it is possible to increase the cross-sectional area of the entire passage for leading the flushing fluid into the through hole 161 due to the provision of the auxiliary inlet groove 111. Note that the "cross-sectional area" denotes the area of a cross section perpendicular to the direction of the flow of the flushing fluid. The same shall apply hereinafter.

That is, since the pumping ring 160 is an annular member, degree of freedom in designing the through hole 161 is high, and hence, normally, it is easy to increase the cross-sectional area thereof. That is, even in the case where its width in the axial direction needs to be reduced, by forming it into a hole that is long in the circumferential direction, it is possible to increase its cross-sectional area. In contrast to this, the thickness of the pumping ring 160 in the radial direction is determined by the annular gap between the outer peripheral surface of the sleeve 110 mounted on the rotary shaft 800 and the inner peripheral surface of the shaft hole of the housing 700 (more specifically, the shaft hole of the housing case 900 in this case). Accordingly, when the annular gap is narrow, the thickness of the pumping ring 160 in the radial direction is reduced, and hence the cross-sectional area of the inlet groove 162 needs to be reduced. However, according to the sealing device 100 of the present example, as described above, by providing the auxiliary inlet groove 111 on the sleeve 110, it is possible to increase the cross-sectional area of the entire passage for leading the flushing fluid into the through hole 161. Note that the cross-sectional area of the passage formed by the inlet groove 162 and the auxiliary inlet groove 111 is preferably equal to or greater than the cross-sectional area of the through hole 161.

As described above, according to the sealing device 100 of the present example, even when the annular gap described above is narrow, it is possible to increase the flow amount of the flushing fluid to be self-circulated by the pumping ring 160, and also to increase a head.

### (Second Example)

Fig. 4 shows a second example of the present invention. In the present example, unlike the configuration shown in the first example, a configuration in which a pumping portion for exerting a pumping function is further provided between the mechanical seal and the pumping ring will be described. The other configuration and operations are the same as those in the first example, and hence the same constituent parts are designated by the same reference numerals, and the description thereof will be appropriately omitted.

Fig. 4 is a schematic cross-sectional view showing a mounted state of the sealing device according to the second example of the present invention. Note that the cross-sectional view in Fig. 4 is a cross-sectional view including the central axis line of the sealing device. However, in Fig. 4, in order to show characteristic portions for the convenience of the description, the phases of cutting positions (positions in a circumferential direction) are appropriately different. In addition, in the cross-sectional view in Fig. 4, only cut planes are shown (depth lines are omitted).

Similarly to the case of the first example, the sealing device 100 according to the present example is also provided for sealing the annular gap between the rotary shaft 800 and the housing 700 having the shaft hole of the rotary shaft 800. Further, the sealing device 100 includes the mechanical seal M, a substantially cylindrical sleeve 170 provided on the outer peripheral side of the rotary shaft 800, and the pumping ring 160. The configurations of the stopper 310 and the fixture 320 are the same as those in the first example, and hence the description thereof are omitted.

In the present example as well, the housing case 900, that is constituted by the first case 910 and the second case 920, is fixed to the housing 700 with the bolt B2. The configurations of the discharge passage 911, the annular groove 912, the supply passage 921, the drain passage 922, the guide 400, and the seal member 200 are the same as those in the first example, and hence the description thereof are omitted.

Similarly to the case of the first example, the mechanical seal M includes the rotary ring 120 that is provided on the rotary shaft side and the stationary ring 130 that is provided on the housing side and slides relative to the rotary ring 120. In addition, the mechanical seal M includes the compression ring 140 and the spring 150 that urge the stationary ring 130 toward the rotary ring 120 side. The rotary ring 120 is constituted such that a pin P fixed to the sleeve 170 is fitted in a notch 122 provided on the rotary ring 120 so that the rotary ring 120 is thereby prevented from rotating relative to the sleeve 170. Note that in the first example, the pin P is provided so as to protrude in the axial direction, whereas, in the present example, the pin P is provided so as to protrude in the radial direction. In addition, the stationary ring 130 is constituted such that the protrusion 924 provided on the second case 920 is fitted in the notch 131 provided on the stationary ring 130 so that the stationary ring 130 is thereby prevented from rotating relative to the housing 700.

With the configuration described above, the rotary ring 120 rotates with the rotation of the rotary shaft 800, and the end faces of the non-moving stationary ring 130 and the rotating rotary ring 120 slide relative to each other. In addition, since the stationary ring 130 is urged toward the rotary ring 120 side by the compression ring 140 and the spring 150, the sliding state of the stationary ring 130 and the rotary ring 120 is maintained.

Note that, in a structure that includes the above-described sealing device 100, a plurality of O rings O are provided in order to seal gaps between individual members. The O ring O is a well-known technique, and hence the description thereof is omitted.

Further, in the present example, an annular protruding portion 173 that exerts a pumping function is provided on the sleeve 170. The annular protruding portion 173 is disposed at a position between the mechanical seal M and the pumping ring 160. Further, on the annular protruding portion 173, a through hole 174 that is inclined so as to be directed from the inner peripheral surface side to the outer peripheral surface side is provided from the mechanical seal M side to the pumping ring 160 side. Accordingly, when the sleeve 170 rotates together with the rotary shaft 800, the flushing fluid is vigorously discharged from the mechanical seal M side to the pumping ring 160 side through the through hole 174 by the centrifugal force. Note that an annular gap between the outer peripheral surface of the annular protruding portion 173 and the inner peripheral surface of the first case 910 is sealed by the wear ring W. Consequently, the flushing fluid that is discharged to the pumping ring 160 side through the through hole 174 is prevented from returning to the mechanical seal M side from the outer peripheral surface side of the annular protruding portion 173.

As described in the first example, the configuration is adopted in which the flushing fluid circulates through the flow passage formed by the unshown piping, the supply passage 921, the interior of the sealing device 100, and the discharge passage 911 with the pumping ring 160 used as the driving source. In addition, the configuration of the pumping ring 160 is also the same as that in the case of the first example, and hence the description thereof is omitted.

In addition, in the present example as well, the pumping ring 160 is positioned in the axial direction by being fixed with the plurality of bolts B1 in a state in which the pumping ring 160 abuts on a stopper portion 172 provided on the sleeve 170.

Further, in the sealing device 100 according to the present example as well, a plurality of auxiliary inlet grooves 171 for leading the flushing fluid into the through holes 161 are provided on the outer peripheral surface of the sleeve 170. In addition, the plurality of the auxiliary inlet grooves 171 are provided one-by-one at positions opposing the individual inlet grooves 162 and the individual through holes 161 provided on the pumping ring 160. As described, in the present example as well, by providing the auxiliary inlet grooves 171 on the sleeve 170, passage for leading the flushing fluid into the through holes 161 are formed by the inlet grooves 162 provided on the pumping ring 160 and the auxiliary inlet grooves 171 provided on the sleeve 170.

With the configuration described above, in the sealing device 100 according to the present example as well, it is possible to obtain the same function effects as those in the case of the first example described above. In addition, in the case of the present example, the annular protruding portion 173 that exerts the pumping function is provided on the sleeve 170. Due to this, when the sleeve 170 rotates together with the rotary shaft 800, the flushing fluid is vigorously discharged to the pumping ring 160 side. Accordingly, a fluid pressure in a space between the annular protruding portion 173 and the pumping ring 160 is increased, and hence the flow amount of the flushing fluid lead into the through hole 161 of the pumping ring 160 is also increased. Consequently, it is possible to make the flow amount of the flushing fluid to be self-circulated by the pumping ring 160 greater than that in the case of the first example, and hence it becomes possible to further increase the head.

Note that in the present example, the configuration in which the annular protruding portion 173 that exerts the pumping function is provided at only one location is described, but the annular protruding portion 173 can also be provided at two or more locations. In this case, it becomes possible to further increase the flow amount of the flushing fluid to be self-circulated by the pumping ring 160. In addition, in the present example, the configuration in which the annular protruding portion 173 that exerts the pumping function is provided integrally with the sleeve 170 is described, but a portion that corresponds to the annular protruding portion 173 may be provided as a separate member.

### REFERENCE SIGNS LIST

100: sealing device. 110, 170: sleeve. 111, 171: auxiliary inlet groove. 112, 172: stopper portion. 120: rotary ring. 130: stationary ring. 140: compression ring. 150: spring. 160: pumping ring. 161: through hole. 162: inlet groove. 163: through hole. 164, 165: mounting groove. 173: annular protruding portion. 174: through hole. 200: seal member. 310: stopper. 320: fixture. 400: guide. 700: housing. 800: rotary shaft. 900: housing case. 910: first case. 911: discharge passage. 912: annular groove. 920: second case. 921: supply passage. 922: drain passage. 923: mounting hole. 924: protrusion. B1, B2: bolt. M: mechanical seal. O: O ring. P: pin. W: wear ring

## Claims

1. A sealing device comprising:
a mechanical seal having a rotary ring that is provided on a rotary shaft side and a stationary ring that is provided on a housing side and slides relative to the rotary ring, the housing having a shaft hole into which a rotary shaft is inserted;
a sleeve that is provided on an outer peripheral side of the rotary shaft and on which the rotary ring is mounted; and
a pumping ring that is mounted on an outer periphery of the sleeve, rotates together with rotation of the rotary shaft and the sleeve, and self-circulates a fluid, wherein
the pumping ring includes:
a through hole that is provided so as to pass through the pumping ring from an inner peripheral surface to an outer peripheral surface and serves as a passage of the fluid; and
an inlet groove that is provided on the inner peripheral surface so as to run from a side face on a side where the mechanical seal is disposed to the through hole, and leads the fluid into the through hole, and
on an outer peripheral surface of the sleeve, an auxiliary inlet groove that leads the fluid into the through hole is provided at a position opposing the inlet groove and the through hole.
